# EUROPEAN PATENT SPECIFICATION

(11) **EP 4 656 526 B1**
(45) Date of publication and mention of the grant of the patent: **21.10.2026**
(21) Application number: 25171155.2
(22) Date of filing: 17.04.2025
(51) Int. Cl.: B64D 45/00, G05B 23/02, G06N 3/08, G01M 13/045

(54) **COMPONENT HEALTH MONITORING**
KOMPONENTENGESUNDHEITSÜBERWACHUNG
SURVEILLANCE DE LA SANTÉ D'UN COMPOSANT

(30) Priority: 06.05.2024 US 202418655629
(43) Date of publication of application: 03.12.2025
(73) Proprietor: The Boeing Company, Arlington, VA 22202 (US)
(72) Inventor: NI, Kangyu, Arlington, 22202 (US); MURPHY, Alice A., Arlington, 22202 (US); LU, Tsai-Ching, Arlington, 22202 (US); KNAPP, Douglas Peter, Arlington, 22202 (US)
(74) Representative: Plasseraud IP

(56) References cited:
- CHEN XIAOHAN ET AL: "Bearing fault diagnosis base on multi-scale CNN and LSTM model", JOURNAL OF INTELLIGENT MANUFACTURING, vol. 32, no. 4, 5 June 2020 (2020-06-05), pages 971 - 987, XP037403307, ISSN: 0956-5515, DOI: 10.1007/S10845-020-01600-2
- YAO YIRAN ET AL: "A bearing fault detection and remaining useful life prediction method based on a multi-branch residual feature fusion mechanism and optimized weight allocation", MEASUREMENT SCIENCE AND TECHNOLOGY, IOP, BRISTOL, GB, vol. 35, no. 2, 27 November 2023 (2023-11-27), XP020551582, ISSN: 0957-0233, [retrieved on 20231127], DOI: 10.1088/1361-6501/AD0B67
- SHEN ZHANG ET AL: "Machine Learning and Deep Learning Algorithms for Bearing Fault Diagnostics - A Comprehensive Review", ARXIV.ORG, CORNELL UNIVERSITY LIBRARY, 201 OLIN LIBRARY CORNELL UNIVERSITY ITHACA, NY 14853, 24 January 2019 (2019-01-24), XP081007572

## Description

### FIELD

The present disclosure relates generally to health monitoring for aircraft components and in particular, to performing health monitoring of aircraft components using neural networks.

### BACKGROUND

Health monitoring is performed for aircraft to increase safety, increase operational efficiency, and reduce costs.

This monitoring can be performed for aircraft components.

This monitoring can be for aircraft components such as generators, engines, avionics systems, and other components.

This monitoring can be performed continuously during operation of an aircraft.

With this type of monitoring, potential inconsistencies or out of tolerance operations of aircraft components can be detected. By detecting these potential inconsistencies or out of tolerance operations, maintenance can be performed prior to an aircraft being out of a desired operating tolerance.

Further, this type of monitoring can also be used by airlines to make decisions about fleet management, component replacement, operational planning, and other actions regarding aircraft.

Publication by Chen Xiaohan et al., entitled "Bearing fault diagnosis based on a multi-scale CNN and LSTM model" (Journal of Intelligent Manufacturing, Vol. 32, No. 4, pp. 971-987), in accordance with its abstract states intelligent fault diagnosis methods based on signal analysis have been widely used for bearing fault diagnosis. The methods use a predetermined transformation (such as empirical mode decomposition, fast Fourier transform, discrete wavelet transform) to convert time-series signals into frequency domain signals, the performance of diagnostic system is significantly rely on the extracted features. However, extracting signal characteristic is fairly time consuming and depends on specialized signal processing knowledge. Although some studies have developed highly accurate algorithms, the diagnostic results rely heavily on large data sets and unreliable human analysis. The study proposes an automatic feature learning neural network that utilizes raw vibration signals as inputs, and uses two convolutional neural networks with different kernel sizes to automatically extract different frequency signal characteristics from raw data. Then long short-term memory was used to identify the fault type according to learned features. The data is down-sampled before inputting into the network, greatly reducing the number of parameters. The experiment shows that the proposed method can not only achieve 98.46% average accuracy, exceeding some state-of-the-art intelligent algorithms based on prior knowledge and having better performance in noisy environments.

### SUMMARY

The present disclosure provides a generator health monitoring system for a generator as defined in claim 1. Preferred embodiments are defined in the appended dependent claims. The generator bearing health monitoring system comprises a computer system, neural network in the computer system, and health analyzer in the computer system. The neural network comprises layers, an input layer in the layers in the neural network, and a last layer before an output layer in the layers in the neural network. The input layer is configured to receive sensor data for a set of variables for generator bearings in the generator. The last layer is configured to receive condition indicator data for a set of condition indicators. The neural network is trained to predict a health status of the generator bearings using the sensor data for the set of variables and the condition indicator data for the set of condition indicators. The health analyzer is configured to identify the sensor data for the set of variables from a sensor system monitoring the generator including the generator bearings; identify the condition indicator data for the set of condition indicators for the generator bearings; input the sensor data into the input layer; input the condition indicator data into the last layer; and receive the prediction of the health status of the generator bearings from the output layer for the neural network in response to inputting the sensor data and the condition indicator data.

An embodiment of the present disclosure provides a health monitoring system comprising a computer system, a neural network in the computer system, and a health analyzer in the computer system. The neural network comprises layers, an input layer in the layers in the neural network, and a subsequent layer in the layers in the neural network. The input layer is configured to receive sensor data for a set of variables for a component. The subsequent layer is configured to receive condition indicator data for a set of condition indicators. The neural network is trained to predict a health status of the component using the sensor data for the set of variables and the condition indicator data for the set of condition indicators. The health analyzer is configured to: input the sensor data into the input layer; input the condition indicator data into the subsequent layer; and receive the health status predicted for the component from the output layer in response to inputting the sensor data and the condition indicator data.

The present disclosure provides a method for monitoring a health of generator bearings as defined in claim 10. Preferred embodiments are defined in the appended dependent claims. Sensor data is identified for a set of variables from a sensor system monitoring a generator including the generator bearings. Condition indicator data for a set of condition indicators for the generator bearings is identified. The sensor data is input into an input layer in layers in a neural network. The condition indicator data is input into a last layer before an output layer in the layers in the neural network. The neural network is trained to predict a health status of the generator bearings using the sensor data for the set of variables and the condition indicator data for the set of condition indicators. A prediction of the health status for the generator bearings is received from the output layer in response to inputting the sensor data and the condition indicator data.

Another embodiment of the present disclosure provides a method for monitoring a health of a component. Sensor data for a set of variables for the component is input into an input layer in layers in a neural network. Condition indicator data for a set of condition indicators is input into a subsequent layer before an output layer in the layers in the neural network. The neural network is trained to predict a health status of the component using the sensor data for the set of variables and the condition indicator data for the set of condition indicators. The health status predicted for the component is received from the output layer in response to inputting the sensor data and the condition indicator data.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a health monitoring environment in accordance with an illustrative embodiment;
**Figure 3** is an illustration of a dataflow for training and using a physics informed neural network in accordance with an illustrative embodiment;
**Figure 4** is an illustration of a diagram of training a physics informed neural network in accordance with an illustrative embodiment;
**Figure 5** is an illustration of a diagram of training a physics informed neural network in accordance with an illustrative embodiment;
**Figure 6** is an illustration of a flowchart of a process for monitoring the health of a component in accordance with an illustrative embodiment;
**Figure 7** is an illustration of a flowchart of a process for generating sensor data in accordance with an illustrative embodiment;
**Figure 8** is an illustration of a flowchart of a process for performing a set of actions in accordance with an illustrative embodiment;
**Figure 9** is an illustration of a flowchart of a process for training a neural network to monitor the health of a component in accordance with an illustrative embodiment;
**Figure 10** is an illustration of a flowchart of a process for monitoring the health of generator bearings in accordance with an illustrative embodiment;
**Figure 11** is an illustration of a flowchart of a process for generating sensor data in accordance with an illustrative embodiment;
**Figure 12** is an illustration of a flowchart of a process for performing a set of actions in accordance with an illustrative embodiment;
**Figure 13** is an illustration of a block diagram of a data processing system in accordance with an illustrative embodiment;
**Figure 14** is an illustration of an aircraft manufacturing and service method in accordance with an illustrative embodiment; and
**Figure 15** is an illustration of a block diagram of an aircraft in which an illustrative embodiment may be implemented.

### DETAILED DESCRIPTION

The illustrative embodiments recognize and take into account one or more different considerations as described herein. For example, currently used condition-based maintenance methods for aircraft components are based on statistics and trending and leverage domain experts and failure instances to establish thresholds. The experts select the relevant data to implement condition indicators. Further, the current techniques do not use a neural network. In addition, current techniques do not incorporate expert knowledge with the model. This expert knowledge can include a selection of condition indicators that may be helpful in predicting the health of an aircraft component.

A machine learning model such as a neural network can be created that takes into account both the sensor data for the aircraft component and expert knowledge. In these illustrative examples, the expert knowledge takes the form of condition indicators that have been identified as useful in determining the health of aircraft components but are not definitive for use in determining the health of the aircraft components.

In one illustrative example, analog data is sampled with high frequency in the form of multivariate time series in an aircraft component such as generator bearings in a generator. This data is sensor data for a set of variables relating to the generator bearings. The sensor data is used to determine health status using a neural network. Further, physics knowledge about the generator bearings is also input into the neural network. This physics knowledge takes the form of condition indicators data for a set of condition indicators. In this example, the neural network uses the sensor data and the condition indicator data as inputs and outputs as a health classification for generator bearings in the generator using this data. In one illustrative example, this health classification can be a determination of whether the generator bearings have grease or a lack of grease.

The illustrative examples provide a method, apparatus, system, and computer program product for performing health monitoring.

In the illustrative examples, a physics informed deep learning approach can be used to train machine learning models such as neural networks to predict the health of aircraft components. These aircraft components can include generators, engines, landing gear, computer systems, structures, and other aircraft components. In one illustrative example, a physics informed deep learning approach can be used to leverage sensor data and embed physics knowledge of generator bearings into training machine learning model such as a neural network.

For example, with respect to a component such as generator bearings, a generator bearing health monitoring system comprises a computer system, neural network in the computer system, and health analyzer in the computer system. The neural network comprises layer, an input layer in the layers, and a last layer before an output layer in the layers. The input layer is configured to receive sensor data for a set of variables for generator bearings in the generator. The last layer is configured to receive condition indicator data for a set of condition indicators. The neural network is trained to predict a health status of the generator bearings using the sensor data for the set of variables and the condition indicator data for the set of condition indicators.

The health analyzer is configured to receive the sensor data for the set of variables from a sensor system monitoring the generator including the generator bearings; receive the condition indicator data for the set of condition indicators for the generator bearings; input the sensor data into the input layer; input the condition indicator data into the last layer; and receive the prediction of the health status of the generator bearings from the output layer for the neural network.

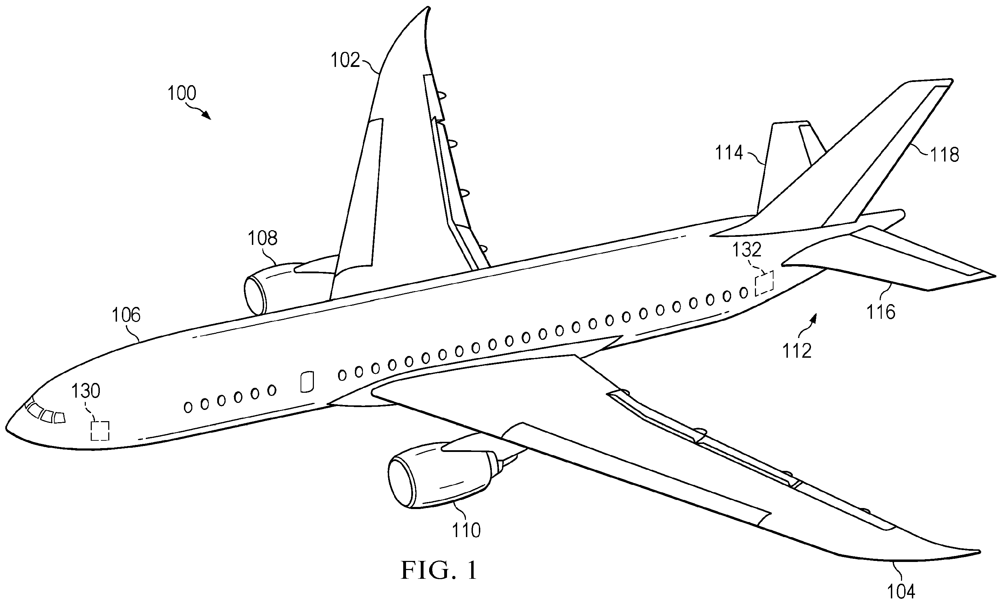

With reference now to the figures, and in particular, with reference to **Figure 1****,** an illustration of an aircraft is depicted in accordance with an illustrative embodiment. In this illustrative example, aircraft **100** has wing **102** and wing **104** attached to body **106.** Aircraft **100** includes engine **108** attached to wing **102** and engine **110** attached to wing **104.**

Body **106** has tail section 112. Horizontal stabilizer 114, horizontal stabilizer 116, and vertical stabilizer 118 are attached to tail section 112 of body 106.

Aircraft 100 is an example of an aircraft in which health monitoring system 130 can be implemented in accordance with an illustrative embodiment. In this illustrative example, health monitoring system 130 can monitor the health of various aircraft components in aircraft 100. This monitoring can be performed continuously, periodically, or in response to events.

For example, health monitoring system 130 can operate to continuously monitor the health of generator 132. Generator 132 can be an auxiliary power unit for aircraft 100. In this example, health monitoring system 130 can monitor the health of generator bearings in generator 132.

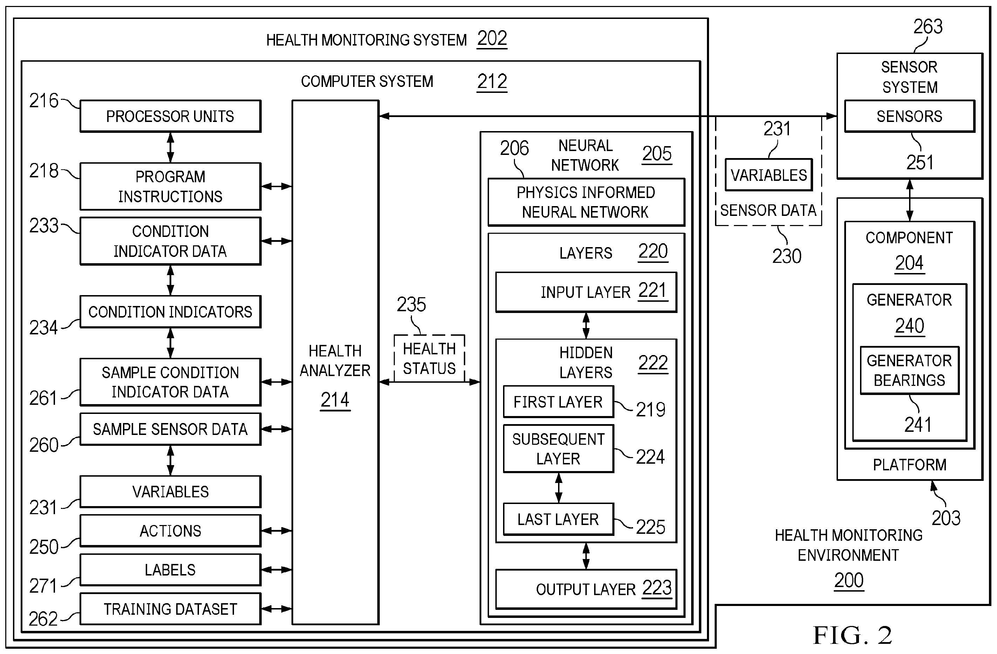

With reference now to **Figure 2****,** an illustration of a block diagram of a health monitoring environment is depicted in accordance with an illustrative embodiment. In this illustrative example, health monitoring environment 200 includes components that can be implemented in health monitoring system 130 in aircraft **100 in** **Figure 1****.**

As depicted, health monitoring system 202 can operate to monitor platform 203. Platform 203 can take a number of different forms. For example, platform 203 can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, a building, or other types of platforms.

As used herein, "a number of" when used with reference to items, means one or more items. For example, "a number of different forms" is one or more different forms.

In this example, health monitoring system 202 can operate to monitor the health of component 204 in platform 203. As used herein, a "set of" when used with reference items means one or more items. In this illustrative example, component 204 can take a number of different forms. For example, component 204 can be selected from a group comprising a generator, generator bearings, a pump, a cooling system, a heat exchanger, an auxiliary power unit, a landing gear system, a wing, an in-flight entertainment system, a computer, or other types of components.

In this illustrative example, health monitoring system 202 comprises a number of different components. As depicted, health monitoring system 202 comprises computer system 212, neural network 205, and health analyzer 214.

Neural network 205 is a model comprising nodes organized into layers 220. These layers in neural network 205 operate to perform transformations on input data. These inputs can travel as signals through layers 220. In this example, layers 220 are fully connected layers. This means that each node in a given layer is connected to every node in a subsequent layer.

In this example, layers 220 include input layer 221, hidden layers 222, and output layer 223. Hidden layers 222 are layers 220 located between input layer 221 and output layer 223.

In this example, input layer 221 is connected to first layer 219 in hidden layers 222. In other words, first layer 219 is configured to receive sensor data 230 for the set of variables 231 for component 204 through input layer 221. The set of variables 231 can be selected from at least one of a voltage, a voltage phase, an acceleration or a vibration frequency, a current, a temperature, an acoustic wave, or other suitable variable.

In this example, neural network 205 is referred to as a deep learning neural network because of the presence of two or more of hidden layers 222.

In this example, input layer **221** in layers **220** in neural network **205** is to receive sensor data **230** for a set of variables **231** for component **204.** Sensor system **263** is configured to generate sensor data **230.** In this depicted example, sensor data **230** is generated from monitoring component **204.** Thus, sensor data **230** can be used for monitoring or analysis of component **204.** Sensor system **263** is comprised of a number of sensors **251.** These sensors can include at least one of a temperature sensor, a light sensor, an accelerometer, a pressure sensor, a magnetic sensor, a voltage sensor, a current sensor, or other suitable types of sensors.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category. For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

Sensor data **230** can take a number of different forms. For example, sensor data **230** can be selected from at least one of analog time series data or digital time series data. This data can be received in channels in which each channel represents data for a particular variable as generated by a particular sensor in sensors **251.**

In this example, subsequent layer **224** is a layer within hidden layers **222.** In one example, subsequent layer **224** can be last layer **225** in hidden layers **222** before output layer **223** in layers **220** in neural network **205.** In this example, subsequent layer **224** is configured to receive condition indicator data **233** for a set of condition indicators **234.**

In these illustrative examples, physics-based features that are identified as being important with respect to health status **235** for component **204** can be represented using a set of condition indicators **234.** In other words, the set of condition indicators **234** can be selected as physics features identified as being relevant to the health of component **204.** In these examples, condition indicators **234** can be derived from sensor data **230** for the set of variables **231** for component **204.**

In this illustrative example, a condition indicator is a value derived from sensor data **230** and can represent physical or operational parameters of component **204.** In this illustrative example, the set of condition indicators **234** can be at least one condition indicator thought to be relevant to generator **240.** For example, the set of condition indicators **234** can be selected from at least one of a bearing based energy, a ball energy, an inner race energy, an outer race energy, a generator frequency of vibrations for the generator, hydraulic pump frequency, a hydraulic pump piston pass frequency, side lube pump frequency, or other type of condition indicator.

In this illustrative example, condition indicator data **233** for the set of condition indicators **234** is generated using sensor data **230.** The sensor data used to determine condition indicator data **233** can include data for other variables in variables **231** in addition to or in place of those variables in the set of variables **231.** For example, sensor data **230** can include the speed of a shaft for a variable in the form of shaft speed for component **204** when component **204** takes the form of generator bearings **241** in generator **240.** The condition indicator can be a speed threshold for a shaft indicating when the shaft speed is greater than desired based on the specification. For example, if the speed of the shaft is over **100** revolutions per minute (RPM) the condition indicator can be set to 1. If the speed of the shaft is equal to or less than **100** revolutions per minute, the condition indicator can be set to 0.

In other examples, the condition indicator can be determined through more complex calculations. Further, the condition indicator can be determined using multiple variables in variables **231.**

With the use of condition indicator data **233** that is input into subsequent layer **224** after first layer **219,** neural network **205** is physics informed neural network **206.**

In this example, neural network **205** has been trained to predict health status **235** of component **204** using sensor data **230** for the set of variables **231** and the condition indicator data **233** for the set of condition indicators **234.** In this example, this prediction is output from output layer **223** in response to receiving sensor data **230** and condition indicator data **233.**

Health status **235** predicted by neural network **205** can take a number of different forms. In one illustrative example, health status **235** can be selected from a group comprising normal, caution, and warning. This status is for component **204.** In one example, component **204** comprises generator bearings **241** located in generator **240.**

Health analyzer **214** can be implemented in software, hardware, firmware, or a combination thereof. When software is used, the operations performed by health analyzer **214** can be implemented in program instructions configured to run on hardware, such as a processor unit. When firmware is used, the operations performed by health analyzer **214** can be implemented in program instructions and data and stored in persistent memory to run on a processor unit. When hardware is employed, the hardware can include circuits that operate to perform the operations in health analyzer **214.**

In the illustrative examples, the hardware can take a form selected from at least one of a circuit system, an integrated circuit, an application-specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field-programmable logic array, a field-programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **212** is a physical hardware system and includes one or more data processing systems. When more than one data processing system is present in computer system **212,** those data processing systems are in communication with each other using a communications medium. The communications medium can be a network. The data processing systems can be selected from at least one of a computer, a server computer, a tablet computer, or some other suitable data processing system.

As depicted, computer system **212** includes a number of processor units **216** that are capable of executing program instructions **218** implementing processes in the illustrative examples. In other words, program instructions **218** are computer-readable program instructions.

As used herein, a processor unit in the number of processor units **216** is a hardware device and is comprised of hardware circuits such as those on an integrated circuit that respond to and process instructions and program code that operate a computer.

When the number of processor units **216** executes program instructions **218** for a process, the number of processor units **216** can be one or more processor units that are in the same computer or in different computers. In other words, the process can be distributed between processor units **216** on the same or different computers in computer system **212.**

Further, the number of processor units **216** can be of the same type or different types of processor units. For example, the number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In this illustrative example, health analyzer **214** identifies sensor data **230** for the set of variables **231** from sensor system **263** monitoring component **204.** Health analyzer **214** identifies condition indicator data **233** for the set of condition indicators **234** for component **204.**

Health analyzer **214** inputs sensor data **230** into input layer **221.** Health analyzer **214** also inputs condition indicator data **233** into subsequent layer **224.** In this example, health analyzer **214** receives prediction of health status **235** of component **204** from output layer **223** for neural network **205** in response to inputting sensor data **230** and condition indicator data **233.**

In this example, health analyzer **214** can perform a set of actions **250** using health status **235** predicted for component **204.** The set of actions **250** can be selected from at least one of logging health status **235,** generating a warning, scheduling maintenance for component **204;** or halting operation of component **204.**

In one illustrative example, health analyzer **214** can train neural network **205.** For example, health analyzer **214** can identify sample sensor data **260** for the set of variables **231** and sample condition indicator data **261** for the set of condition indicators **234.** With this example, health analyzer **214** can generate training dataset **262** using sample sensor data **260** for the set of variables **231** and sample condition indicator data **261** for the set of condition indicators **234.** Health analyzer **214** can also include labels **271** in training dataset **262.** Labels **271** can be generated by health analyzer **214** for sample sensor data **260** and sample condition indicator data **261.** Labels **271** can be determined from knowing the health of component **204** at the time sample sensor data **260** was collected. These labels can also be used with sample condition indicator data **261** determined from sample sensor data **260.** Health analyzer **214** can then train neural network **205** using training dataset **262.**

In one illustrative example, component **204** can be generator bearings **241** in generator **240.** With this example, health status **235** for generator bearings **241** can be predicted by neural network **205.** Further, the prediction of the health status **235** can also indirectly indicate the health of generator **240.** Other components other than generator bearings **241** within generator **240** can also affect the health of generator **240** with this example.

Further, with this example, the selection of subsequent layer within layers **220** can be based on the amount of importance to be given to condition indicators **234.** In other words, subsequent layer **224** can be another layer in hidden layers **222** other than last layer **225.** As subsequent layer **224** is selected to be closer to output layer **223,** the importance of condition indicators **234** in determining health status **235** increases relative to the set of variables **231** input into first layer **219** via input layer **221.**

In one illustrative example, one or more technical solutions are present that overcome a technical problem with predicting the health of components. As a result, one or more technical solutions may provide a technical effect using a neural network that receives sensor data for a set of variables generated from monitoring the components and a set of condition indicator data for condition indicators for the components. The condition indicator data is input at a later layer as compared to the sensor data. The neural network is configured such that this type of data input provides greater importance to the condition indicator data in predicting the health of the component.

Computer system **212** can be configured to perform at least one of the steps, operations, or actions described in the different illustrative examples using software, hardware, firmware, or a combination thereof. As a result, computer system **212** operates as a special purpose computer system in which health analyzer **214** in computer system **212** enables increased accuracy in predicting health states for components. In particular, health analyzer **214** transforms computer system **212** into a special purpose computer system as compared to currently available general computer systems that do not have health analyzer **214.**

In the illustrative example, the use of health analyzer **214** in computer system **212** integrates processes into a practical application for monitoring the health of the components. In this example, health analyzer **214** in computer system **212** is directed to a practical application of processes integrated into health analyzer **214** in computer system **212** that enables performing a set of actions for the component.

For example, a set of actions can be taken with respect to the component using the prediction of the health state of a component. These actions can include at least one of logging the health status, generating a warning, scheduling maintenance for the component; halting operation of the components, or other suitable actions as a practical application of the process used to generate the prediction of the health state for the components.

The illustration of health monitoring environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, health status **235** can take other forms other than normal, caution, and warning. In another illustrative example, the health status can be a numerical label from 1 to 5 with one being good and five being poor. In another example, the status can be operating within tolerance for operating outside of tolerance.

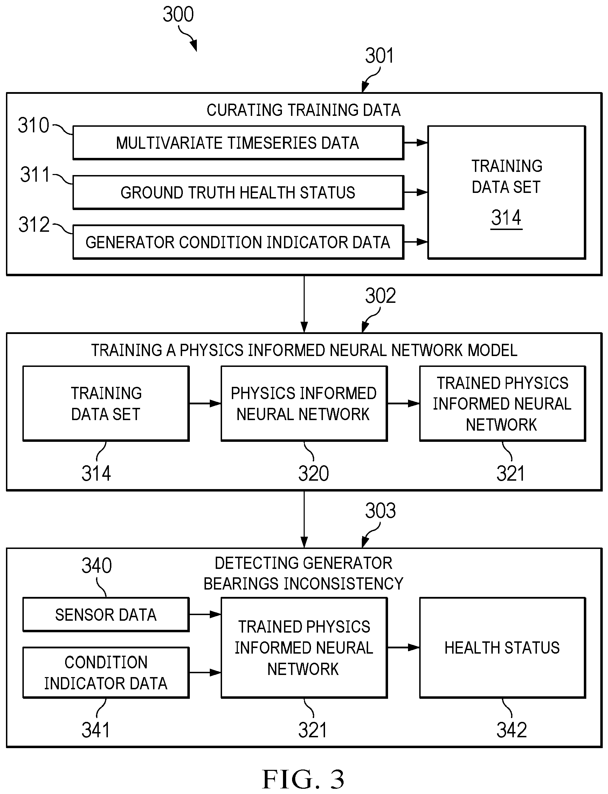

In another illustrative example, health analyzer **214** monitors one or more components of the same type as component **204** using neural network **205.** In yet another illustrative example, one or more neural networks can be present that have been trained to predict a health status for other types of components in platform **203** or in other platforms. In another example, health analyzer **214** can also be referred to as a controller. Turning now to **Figure 3****,** an illustration of a dataflow for training and using a physics informed neural network is depicted in accordance with an illustrative embodiment. In this illustrative example, a neural network in the form of a physics informed neural network can be trained and used to predict the health status for a component such as generator bearings **241** in **Figure 2****.** Dataflow **300** can be implemented using health analyzer **214** in **Figure 2****.**

In this illustrative example, dataflow **300** comprises curating training data in block **301;** training a physics informed neural network in block **302,** and detecting the generator bearings inconsistency in block **303.** In this example, multivariate time series data **310** is identified. In this example, multiple time series windows with a selected length are identified. In this example, this time series data can be analog multivariate time series data and is an example of an implementation for sample sensor data **260** for the set of variables **231** in **Figure 2****.** The time series data can be generated from sensors monitoring a generator sensor. Initial data is generated for multivariate time series data **310** with grease. Additional runs of the generator can be performed with the grease removed. The sensor data from this operation of the generator is also in multivariate time series data **310.** In this illustrative example, the generator sensor data collected for multivariate time series data **310** can include, for example, accelerometer X, accelerometer Y, accelerometer Z, voltage Phase A, voltage Phase B, voltage Phase C, 1/Rev vibration, and temperature. In this example, acceleration and voltage phase can be detected from multiple locations. 1Rev/ vibration is a vibration measurement made once per revolution of a shaft.

Additionally, ground truth health status **311** is identified for each of the time series windows in multivariate time series data **310.** For example, ground truth health status **311** can be greased or can lack grease in the generator bearings. Additionally, generator condition indicator data **312** is identified for time windows corresponding to multivariate time series data **310.** Thus, condition indicator data **233** also corresponds to ground truth health status **311.** In this example, these condition indicators represent physics knowledge relating to the health of generator bearings. Generator condition indicator data **312** can include data relating to varying energy and shocked pulsed energy. These condition indicators can be derived or calculated using the sensor data in multivariate time series data **310** or other data generated from monitoring the generator.

In this illustrative example, multivariate time series data **310,** generator condition indicator data **312,** and ground truth health status **311** form training dataset **314.** In training a physics informed neural network in block **302,** physics informed neural network **320** is identified for training. This model is trained using training dataset **314** to form trained physics informed neural network **321.**

Next in detected generator bearings inconsistency in block **303,** sensor data **340** and condition indicator data **341** are identified. This data is input into trained physics informed neural network **321.** In this example, sensor data **340** is input into an input layer in trained physics informed neural network **321.** Condition indicator data **341** is input into a subsequent layer after the input layer and prior to the output layer in trained physics informed neural network **321.** In response to receiving this data, this model outputs a prediction of health status **342.**

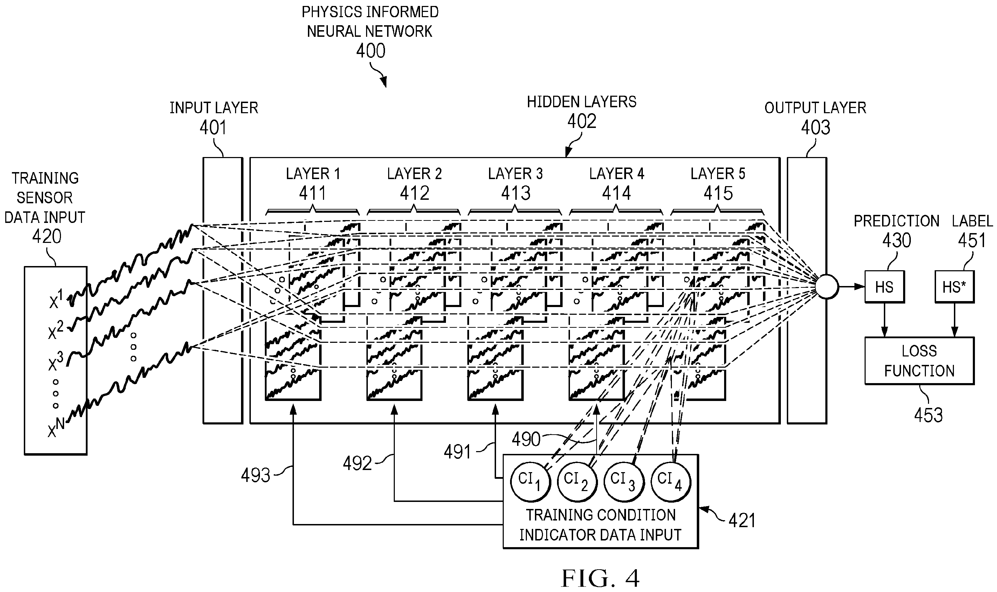

Turning next to **Figure 4****,** an illustration of a diagram of training a physics informed neural network is depicted in accordance with an illustrative embodiment. In this example, physics informed neural network **400** is an example of an implementation for physics informed neural network **206** in **Figure 2****.** This neural network can be trained using dataflow **300** in **Figure 3****.**

As depicted, physics informed neural network **400** comprises input layer **401,** hidden layers **402,** and output layer **403.** Hidden layers **402** include layer 1 **411,** layer 2 **412,** layer 3 **413,** layer 4 **414,** and layer 5 **415.** These layers are fully connected to each other.

In training physics informed neural network **400,** training sensor data input **420** is input into input **layer 401.** In the training phase, training sensor data input **420** comprises training data from a training dataset such as sample sensor data **260** in training dataset **262** in **Figure 2** and multivariate time series data **310** in training dataset **314** in **Figure 3****.** Training sensor data input **420** comprises multivariate time series data such as multivariate time series data **310** in **Figure 3****.** This multivariate time series data is for a number of variables monitored for a component such as generator bearings. This data can be monitored using analog channels for a sensor system monitoring the generator bearings. For example, training sensor data input **420** can include accelerometer X, accelerometer Y, accelerometer Z, voltage Phase A, voltage Phase B, voltage Phase C, 1/Rev vibration, and temperature.

In addition to training physics informed neural network **400,** training condition indicator data input **421** is also input into physics informed neural network **400.** In this example, training condition indicator data input **421** comprises training data such as sample condition indicator data **261** and training dataset **262** in **Figure 2** and generator condition indicator data **312** in training dataset **314** in **Figure 3****.**

As depicted, training condition indicator data input **421** is not input into input layer **401** as with training sensor data input **420.** Instead, training condition indicator data input **421** is input into one of hidden layers **402** after first layer in hidden layers **402,** which is layer 1 **411.** In this example, the hidden layer is layer 5 **415.** This layer is an example of subsequent layer **224** in **Figure 2** and is an example of last layer **225** in **Figure 2****.** Training condition indicator data input **421** is concatenated with latent variables in layer 5 **415.** For example, training condition indicator data input **421** can be joined with the hidden variables in this layer using a vector or tensor that serves as an input into the hidden layer.

The selection of a subsequent layer later in physics informed neural network **400** enables increasing the importance or emphasis of data for condition indicators. In this example, the subsequent layer is selected to be one later than layer 1 **411** and before output layer **403** as depicted by arrow **490,** arrow **491,** arrow **492,** and arrow **493.**

In this illustrative example, physics informed neural network **400** processes training sensor data input **420** and training condition indicator data input **421** and outputs prediction **430** from output layer **403.** Prediction **430** is a prediction basic form of a health status to predict the health of the generator bearings. When the components are generator bearings, the prediction can be green, yellow, or red in one example. Green represents that the generator bearings are in good condition grease. Yellow indicates that the bearings are in good condition but not greased. Red indicates that the bearings are in poor condition and not greased. In this example, loss function **453** is used to determine the accuracy of prediction **430.** Loss function **453** receives prediction **430** and label **451** as inputs. In this example, label **451** is the health status for the generator bearings for the particular training data in training sensor data input **420** and training condition indicator data input **421.** Label **451** can be, for example, a label in labels **271** used with training dataset **262** or a label from ground truth health status **311** in **Figure 3****.**

Loss function **453** be implemented using a cost function that is the mean squared error between the true health status represented by label **451** and predicted health status in prediction **450.** The weights and biases in physics informed neural network **400** are updated until convergence occurs from solving a regression problem. In this example, the weights and biases are adjusted to reduce the reference or loss determined by loss function physics informed neural network **400.**

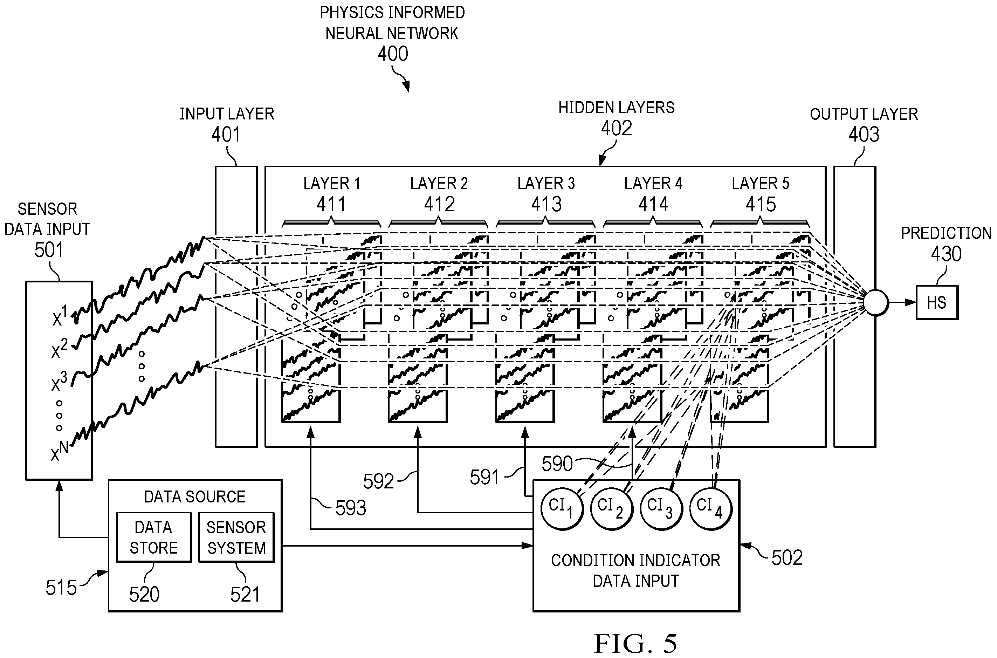

After training, physics informed neural network **400** can be used to generate prediction **430** for the generator bearings. With reference next to **Figure 5****,** an illustration of a diagram of training a physics informed neural network is depicted in accordance with an illustrative embodiment. In the illustrative examples, the same reference numeral may be used in more than one figure. This reuse of a reference numeral in different figures represents the same element in the different figures.

In this example, physics informed neural network **400** has been trained and can be used to predict the health generator bearings. As depicted, actual sensor data is now used in place of the training data. In this example, the sensor data comprises sensor data input **501** and condition indicator data input **502** rather than training data in a training dataset. Also in this example, loss function **453** is not needed.

In this illustrative example, physics informed neural network **400** can operate to generate prediction **430** in a number of different ways. Physics informed neural network **400** can receive sensor data comprising sensor data input **501** and condition indicator data input **502** from data source **515.** In this illustrative example, data source **515** is data store **520.** Data store **520** is a location where data is collected. Data store **520** can be, for example, a database, a file, or other data structure for which data can be collected. In this example, prediction **430** is time subsequent from when the sensor data was generated.

In another illustrative example, data source **515** is sensor system **521.** Sensor system **521** generates sensor data that is used as sensor data input **501.** Additionally, the sensor data generated by sensor system **521** can be processed to create condition indicator data input **502.** With this example, the sensor data is sent as quickly as possible to physics informed neural network **400** such that prediction **430** generated in real time or as close to real time as possible.

This illustrative example, condition indicator data input **502** is sent into layer 5 **415.** This input is sent into the same layer as training condition indicator data input **421** in **Figure 4****.** In other illustrative examples, this input can be sent into other layers in hidden layers **402** such as indicated by arrow **590,** arrow **591,** arrow **592,** and arrow **593.** The selection of layer 1 411 would result in training condition indicator input **421** having the same importance as training sensor data input **420.**

In these examples, generating prediction **430** cannot be performed quickly enough by a human operator attempting to process the sensor data input **501** and condition indicator data input **502.** In other words, the human operator cannot perform the processing of this input data using weights and biases in the layers in physics informed neural network **400** as performed by this neural network. This analysis prediction cannot be generated quickly enough in real time to perform an action that may be needed. Further, even when analyzing a later time, prediction **430** cannot be made quickly enough by the human operator to perform other actions such as scheduling maintenance or taking the component out of use to increase safety in a timely manner. When the component is located in a fleet of platforms such as 10 commercial airplanes, 50 commercial airplanes, or hundreds of commercial airplanes, the analysis needed for the prediction is infeasible to be performed by a human operator.

The illustration of training and use of physics informed neural network **400** is provided as an example of one implementation for training and using a physics informed neural network. This example is not meant to limit the manner in which physics informed neural networks can be trained and implemented in other examples. For example, physics informed neural network **400** can be trained and used to predict the health of other types of components of the generator bearings. For example, physics informed neural network **400** can be trained to predict the health of a generator, an in-flight entertainment system, a pump, or some other suitable components. In another illustrative example, when other numbers of layers to be present in addition to or in place of the five hidden layers shown for physics informed neural network **400.** For example, another physics informed neural network other numbers of hidden layers **402** such as have three layers, 12 layers, 17 layers, or some other number of hidden layers.

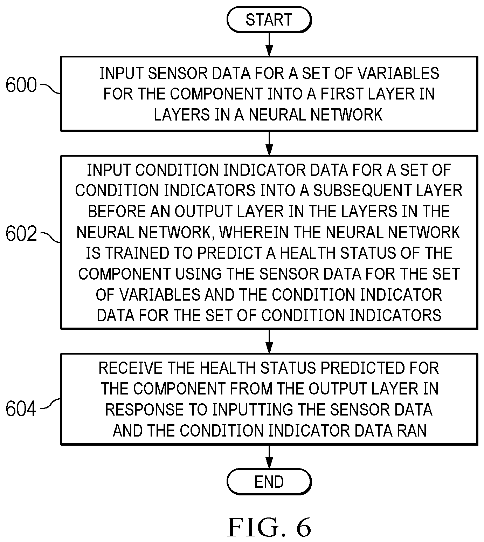

Turning next to **Figure 6****,** an illustration of a flowchart of a process for monitoring the health of a component is depicted in accordance with an illustrative embodiment. The process in **Figure 6** can be implemented in hardware, software, or both. When implemented in software, the process can take the form of program instructions that are run by one of more processor units located in one or more hardware devices in one or more computer systems. For example, the process can be implemented in health analyzer **214** in computer system **212** in **Figure 2****.**

The process begins by inputting sensor data for a set of variables for the component into a first layer in layers in a neural network (operation **600).** The process inputs condition indicator data for a set of condition indicators into a subsequent layer before an output layer in the layers in the neural network, wherein the neural network is trained to predict a health status of the component using the sensor data for the set of variables and the condition indicator data for the set of condition indicators (operation **602).**

The process receives the health status predicted for the component from the output layer in response to inputting the sensor data and the condition indicator data ran (operation **604).** The process terminates thereafter.

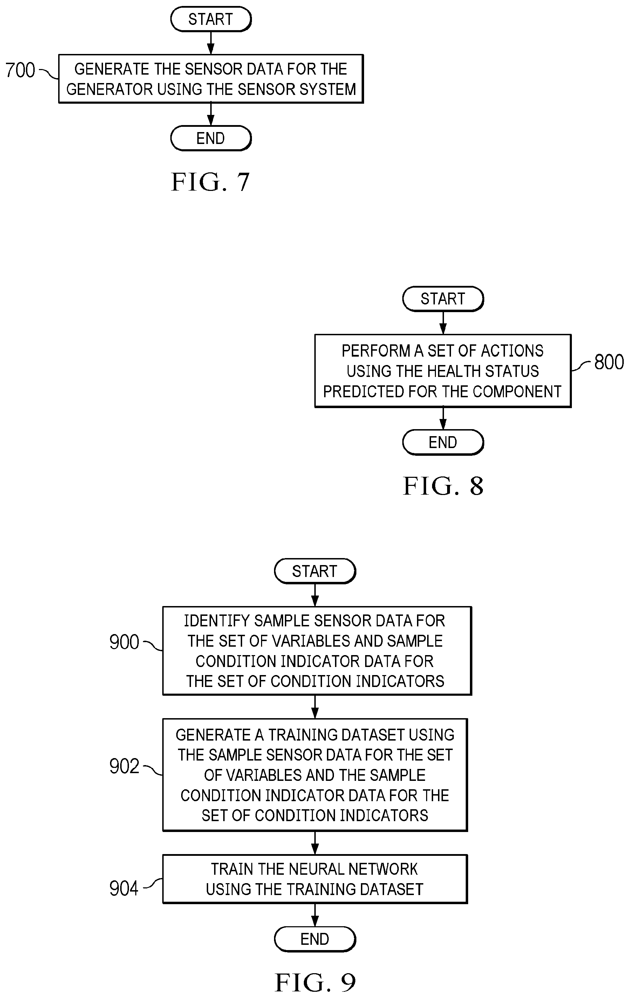

With reference to **Figure 7****,** an illustration of a flowchart of a process for generating sensor data is depicted in accordance with an illustrative embodiment. The process in this figure is an example of an additional operation that can be performed with the operations in **Figure 6****.**

The process generates the sensor data for the generator using the sensor system (operation **700).** The process terminates thereafter.

Next in **Figure 8****,** an illustration of a flowchart of a process for performing a set of actions is depicted in accordance with an illustrative embodiment. The process in this figure is an example of an additional operation that can be performed with the operations in **Figure 6****.**

The process performs a set of actions using the health status predicted for the component (operation **800).** The process terminates thereafter. Operation **800** is an example of a practical application of determining the health status for a component.

In other words, a set of actions can be performed for the component based on the health status predicted for the component. For example, the set of actions is selected from at least one of logging the health status, generating a warning, scheduling maintenance for the generator bearings; or halting operation of the generator in which the generator bearings are located.

With reference next to **Figure 9****,** an illustration of a flowchart of a process for training a neural network to monitor the health of a component is depicted in accordance with an illustrative embodiment. The process in **Figure 9** can be implemented in hardware, software, or both. When implemented in software, the process can take the form of program instructions that are run by one of more processor units located in one or more hardware devices in one or more computer systems. For example, the process can be implemented in health analyzer **214** in computer system **212** in **Figure 2****.**

The process begins by identifying sample sensor data for the set of variables and sample condition indicator data for the set of condition indicators (operation **900).** The process generates a training dataset using the sample sensor data for the set of variables and the sample condition indicator data for the set of condition indicators (operation **902).**

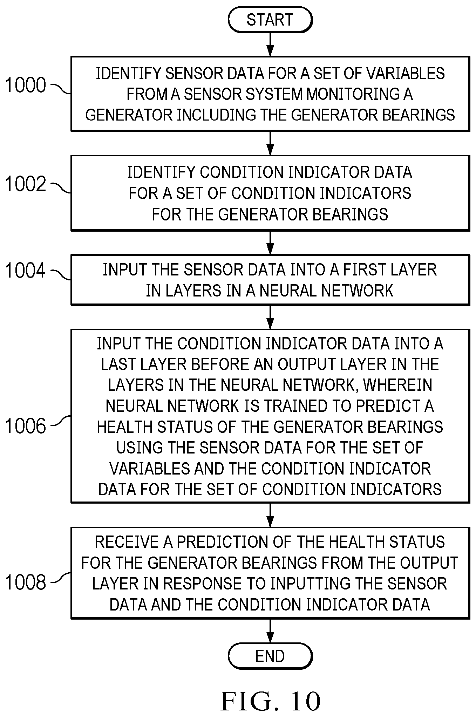

The process trains the neural network using the training dataset (operation **904).** The process terminates thereafter. Turning next to **Figure 10****,** an illustration of a flowchart of a process for monitoring the health of generator bearings is depicted in accordance with an illustrative embodiment. The process in **Figure 10** can be implemented in hardware, software, or both. When implemented in software, the process can take the form of program instructions that are run by one of more processor units located in one or more hardware devices in one or more computer systems. For example, the process can be implemented in health analyzer **214** in computer system **212** in **Figure 2****.**

The process begins by identifying sensor data for a set of variables from a sensor system monitoring a generator including the generator bearings (operation **1000).** The process identifies condition indicator data for a set of condition indicators for the generator bearings (operation **1002).**

The process inputs the sensor data into a first layer in layers in a neural network (operation **1004).** The process inputs the condition indicator data into a last layer before an output layer in the layers in the neural network, wherein the neural network is trained to predict a health status of the generator bearings using the sensor data for the set of variables and the condition indicator data for the set of condition indicators (operation **1006).**

The process receives a prediction of the health status for the generator bearings from the output layer in response to inputting the sensor data and the condition indicator data (operation **1008).** The process terminates thereafter.

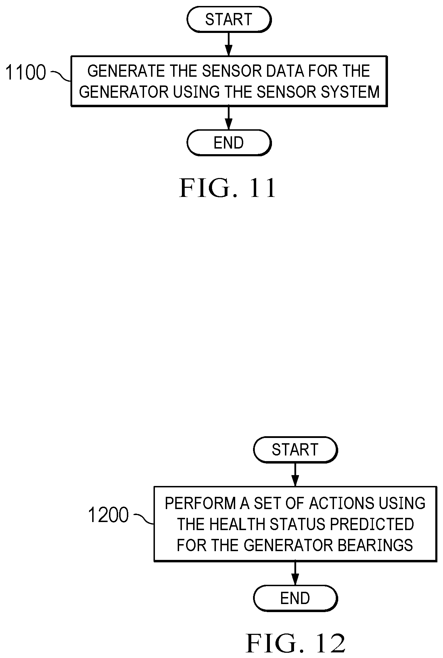

With reference to **Figure 11****,** an illustration of a flowchart of a process for generating sensor data is depicted in accordance with an illustrative embodiment. The process in this figure is an example of an additional operation that can be performed with the operations in **Figure 10****.**

The process generates the sensor data for the generator using the sensor system (operation **1100).** The process terminates thereafter.

Turning to **Figure 12****,** an illustration of a flowchart of a process for performing a set of actions is depicted in accordance with an illustrative embodiment. The process in this figure is an example of an additional operation that can be performed with the operations in **Figure 10****.**

The process performs a set of actions using the health status predicted for the generator bearings (operation **1200).** The process terminates thereafter. Operation **1200** is an example of a practical application of determining the health status for the generator bearings.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

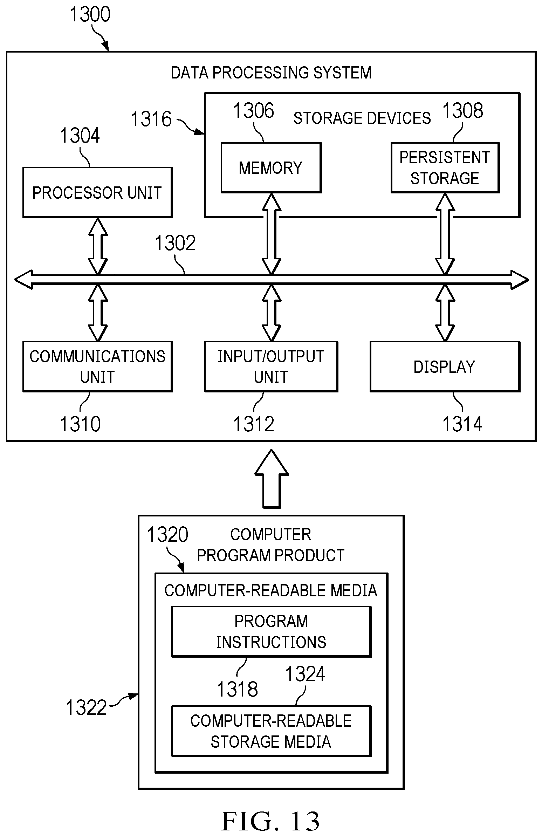

Turning now to **Figure 13****,** a block diagram of a data processing system is depicted in accordance with an illustrative embodiment. Data processing system **1300** can also be used to implement computer system **212** in **Figure 2****.** In this illustrative example, data processing system **1300** includes communications framework **1302,** which provides communications between processor unit **1304,** memory **1306,** persistent storage **1308,** communications unit **1310,** input/output (I/O) unit **1312,** and display **1314.** In this example, communications framework **1302** takes the form of a bus system.

Processor unit **1304** serves to execute instructions for software that can be loaded into memory **1306.** Processor unit **1304** includes one or more processors. For example, processor unit **1304** can be selected from at least one of a multicore processor, a central processing unit (CPU), a graphics processing unit (GPU), a physics processing unit (PPU), a digital signal processor (DSP), a network processor, or some other suitable type of processor. Further, processor unit **1304** can be implemented using one or more heterogeneous processor systems in which a main processor is present with secondary processors on a single chip. As another illustrative example, processor unit **1304** can be a symmetric multi-processor system containing multiple processors of the same type on a single chip.

Memory **1306** and persistent storage **1308** are examples of storage devices **1316.** A storage device is any piece of hardware that is capable of storing information, such as, for example, without limitation, at least one of data, program instructions in functional form, or other suitable information either on a temporary basis, a permanent basis, or both on a temporary basis and a permanent basis. Storage devices **1316** may also be referred to as computer-readable storage devices in these illustrative examples. Memory **1306,** in these examples, can be, for example, a random-access memory or any other suitable volatile or non-volatile storage device. Persistent storage **1308** may take various forms, depending on the particular implementation.

For example, persistent storage **1308** may contain one or more components or devices. For example, persistent storage **1308** can be a hard drive, a solid-state drive (SSD), a flash memory, a rewritable optical disk, a rewritable magnetic tape, or some combination of the above. The media used by persistent storage **1308** also can be removable. For example, a removable hard drive can be used for persistent storage **1308.** Communications unit **1310,** in these illustrative examples, provides for communications with other data processing systems or devices. In these illustrative examples, communications unit **1310** is a network interface card.

Input/output unit **1312** allows for input and output of data with other devices that can be connected to data processing system **1300.** For example, input/output unit **1312** may provide a connection for user input through at least one of a keyboard, a mouse, or some other suitable input device. Further, input/output unit **1312** may send output to a printer. Display **1314** provides a mechanism to display information to a user.

Instructions for at least one of the operating system, applications, or programs can be located in storage devices **1316,** which are in communication with processor unit **1304** through communications framework **1302.** The processes of the different embodiments can be performed by processor unit **1304** using computer-implemented instructions, which may be located in a memory, such as memory **1306.**

These instructions are referred to as program instructions, computer usable program instructions, or computer-readable program instructions that can be read and executed by a processor in processor unit **1304.** The program instructions in the different embodiments can be embodied on different physical or computer-readable storage media, such as memory **1306** or persistent storage **1308.**

Program instructions **1318** are located in a functional form on computer-readable media **1320** that is selectively removable and can be loaded onto or transferred to data processing system **1300** for execution by processor unit **1304.** Program instructions **1318** and computer-readable media **1320** form computer program product **1322** in these illustrative examples. In the illustrative example, computer-readable media **1320** is computer-readable storage media **1324.**

Computer-readable storage media **1324** is a physical or tangible storage device used to store program instructions **1318** rather than a medium that propagates or transmits program instructions **1318.** Computer-readable storage media **1324** may be at least one of an electronic storage medium, a magnetic storage medium, an optical storage medium, an electromagnetic storage medium, a semiconductor storage medium, a mechanical storage medium, or other physical storage medium. Some known types of storage devices that include these mediums include: a diskette, a hard disk, a random access memory (RAM), a read-only memory (ROM), an erasable programmable read-only memory (EPROM or Flash memory), a static random access memory (SRAM), a compact disc read-only memory (CD-ROM), a digital versatile disk (DVD), a memory stick, a floppy disk, a mechanically encoded device, such as punch cards or pits / lands formed in a major surface of a disc, or any suitable combination thereof.

Computer-readable storage media **1324,** as that term is used in the present disclosure, is not to be construed as storage in the form of transitory signals per se, such as at least one of radio waves or other freely propagating electromagnetic waves, electromagnetic waves propagating through a waveguide, light pulses passing through a fiber optic cable, electrical signals communicated through a wire, or other transmission media. Further, data can be moved at some occasional points in time during normal operations of a storage device. These normal operations include access, de-fragmentation or garbage collection. However, these operations do not render the storage device as transitory because the data is not transitory while the data is stored in the storage device. Alternatively, program instructions **1318** can be transferred to data processing system **1300** using a computer-readable signal media. The computer-readable signal media are signals and can be, for example, a propagated data signal containing program instructions **1318.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

Further, as used herein, "computer-readable media **1320"** can be singular or plural. For example, program instructions **1318** can be located in computer-readable media **1320** in the form of a single storage device or system. In another example, program instructions **1318** can be located in computer-readable media **1320** that is distributed in multiple data processing systems. In other words, some instructions in program instructions **1318** can be located in one data processing system while other instructions in program instructions **1318** can be located in another data processing system. For example, a portion of program instructions **1318** can be located in computer-readable media **1320** in a server computer while another portion of program instructions **1318** can be located in computer-readable media **1320** located in a set of client computers.

The different components illustrated for data processing system **1300** are not meant to provide architectural limitations to the manner in which different embodiments can be implemented. In some illustrative examples, one or more of the components may be incorporated in or otherwise form a portion of, another component. For example, memory **1306,** or portions thereof, may be incorporated in processor unit **1304** in some illustrative examples. The different illustrative embodiments can be implemented in a data processing system including components in addition to or in place of those illustrated for data processing system **1300.** Other components shown in **Figure 13** can be varied from the illustrative examples shown. The different embodiments can be implemented using any hardware device or system capable of running program instructions **1318.**

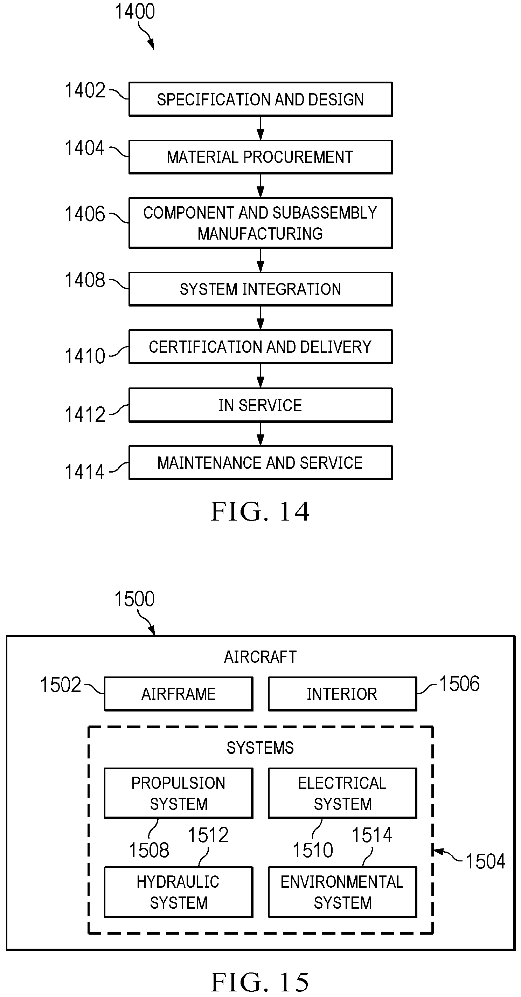

Illustrative embodiments of the disclosure may be described in the context of aircraft manufacturing and service method **1400** as shown in **Figure 14** and aircraft **1500** as shown in **Figure 15****.** Turning first to **Figure 14****,** an illustration of an aircraft manufacturing and service method is depicted in accordance with an illustrative embodiment. During pre-production, aircraft manufacturing and service method **1400** may include specification and design **1402** of aircraft **1500** in **Figure 15** and material procurement **1404.**

During production, component and subassembly manufacturing **1406** and system integration **1408** of aircraft **1500** in **Figure 15** takes place. Thereafter, aircraft **1500** in **Figure 15** can go through certification and delivery **1410** in order to be placed in service **1412.** While in service **1412** by a customer, aircraft **1500** in **Figure 15** is scheduled for routine maintenance and service **1414,** which may include modification, reconfiguration, refurbishment, and other maintenance or service.

Each of the processes of aircraft manufacturing and service method **1400** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 15****,** an illustration of an aircraft is depicted in which an illustrative embodiment may be implemented. In this example, aircraft **1500** is produced by aircraft manufacturing and service method **1400** in **Figure 14** and may include airframe **1502** with plurality of systems **1504** and interior **1506.** Examples of systems **1504** include one or more of propulsion system **1508,** electrical system **1510,** hydraulic system **1512,** and environmental system **1514.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1400** in **Figure 14****.**

In one illustrative example, components or subassemblies produced in component and subassembly manufacturing **1406** in **Figure 14** can be fabricated or manufactured in a manner similar to components or subassemblies produced while aircraft **1500** is in service **1412** in **Figure 14****.** As yet another example, one or more apparatus embodiments, method embodiments, or a combination thereof can be utilized during production stages, such as component and subassembly manufacturing **1406** and system integration **1408** in **Figure 14****.** One or more apparatus embodiments, method embodiments, or a combination thereof may be utilized while aircraft **1500** is in service **1412,** during maintenance and service **1414** in **Figure 14****,** or both. The use of a number of the different illustrative embodiments may substantially expedite the assembly of aircraft **1500,** reduce the cost of aircraft **1500,** or both expedite the assembly of aircraft **1500** and reduce the cost of aircraft **1500.** In this illustrative example, health monitoring system **130** in **Figure 1** and health monitoring system **202** in **Figure 2** are examples of health monitoring systems that can be used during in service **1412** to determine when maintenance may be needed. This system can be used in real time on aircraft **1500** to determine when maintenance or other actions may be needed with respect to various components of aircraft **1500.** Further, the health monitoring systems can be used during maintenance and service **1414** to process sensor data collected during in service **1412** to determine whether maintenance is needed. This maintenance can include reconfiguration, refurbishment, replacement, repair, and other maintenance or service.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A generator health monitoring system for a generator (240), wherein the generator health monitoring system comprises:
a computer system (212);
a neural network (205) in the computer system (212),
wherein the neural network (205) comprises:
layers (220);
a first layer (219) in the layers (220) in the neural network (205), wherein the first layer (219) is configured to receive sensor data (230, 340) for a set of variables (231) for generator bearings (241) in the generator (240); and a last layer (225) before an output layer (223) in the layers (220) in the neural network (205), wherein the last layer (225) is configured to receive condition indicator data (233, 341) for a set of condition indicators (234) and wherein the neural network (205) is trained to predict a health status (235, 342) of the generator bearings (241) using the sensor data (230, 340) for the set of variables (231) and the condition indicator data (233, 341) for the set of condition indicators (234); and
a health analyzer (214) in the computer system (212), wherein the health analyzer (214) is configured to:
identify the sensor data (230, 340) for the set of variables (231) from a sensor system (263) monitoring the generator (240) including the generator bearings (241); identify the condition indicator data (233, 341) for the set of condition indicators (234) for the generator bearings (241);
input the sensor data (230, 340) into the first layer (219);
input the condition indicator data (233, 341) into the last layer (225); and
receive the prediction (430) of the health status (235, 342) of the generator bearings (241) from the output layer (223) for the neural network (205) in response to inputting the sensor data (230, 340) and the condition indicator data (233, 341).

2. The generator health monitoring system of claim 1 further comprising:
the sensor system (263) configured to generate the sensor data (230, 340) for the generator.

3. The generator health monitoring system of claim 1 or 2, wherein the health analyzer (214) is configured to:
perform a set of actions (250) using the health status (235, 342) predicted for the generator bearings (241).

4. The generator health monitoring system of claim 3, wherein the set of actions (250) is selected from at least one of logging the health status (235, 342), generating a warning, scheduling maintenance for the generator bearings (241); or halting operation of the generator in which the generator bearings (241) are located.

5. The generator health monitoring system of anyone of claims 1 to 4, wherein the neural network (205) is a physics informed neural network (205).

6. The generator health monitoring system of anyone of claims 1 to 5, wherein the set of condition indicators (234) is selected from at least one a bearing based energy, a ball energy, an inner race energy, an outer race energy, a generator frequency of vibrations for the generator (240), hydraulic pump frequency, a hydraulic pump piston pass frequency, or side lube pump frequency.

7. The generator health monitoring system of anyone of claims 1 to 6, wherein the set of variables (231) is selected from at least one of a voltage, a voltage phase, an acceleration or a vibration frequency, a current, a temperature, or an acoustic wave.

8. The generator health monitoring system of anyone of claims 1 to 7, wherein the layers (220) are fully connected layers (220).

9. The generator health monitoring system of anyone of claims 1 to 8, wherein the health analyzer (214) in the computer system (212) is configured to:
identify sample sensor data (260) for the set of variables (231) and sample condition indicator data 261) for the set of condition indicators (234);
generate a training dataset (262, 314) using the sample sensor data (260) for the set of variables (231) and the sample condition indicator data 261) for the set of condition indicators (234); and
train the neural network (205) using the training dataset (262, 314).

10. A method for monitoring a health of generator bearings (241), the method comprising:
identifying (1000) sensor data (230, 340) for a set of variables (231) from a sensor system (263) monitoring a generator (240) including the generator bearings (241);
identifying (1002) condition indicator data (233, 341) for a set of condition indicators (234) for the generator bearings (241);
inputting (1004) the sensor data (230, 340) into a first layer (219) in layers (220) in a neural network (205);
inputting (1006) the condition indicator data (233, 341) into a last layer (225) before an output layer (223) in the layers (220) in the neural network (205), wherein the neural network (205) is trained to predict a health status (235, 342) of the generator bearings (241) using the sensor data (230, 340) for the set of variables (231) and the condition indicator data (233, 341) for the set of condition indicators (234); and
receiving (1008) a prediction (430) of the health status (235, 342) for the generator bearings (241) from the output layer (223) in response to inputting the sensor data (230, 340) and the condition indicator data (233, 341).

11. The method of claim 10 further comprising:
generating (1100) the sensor data (230, 340) for the generator bearings (241) using the sensor system (263).

12. The method of claim 10 or 11 further comprising:
performing (1200) a set of actions (250) using the health status (235, 342) predicted for the generator bearings (241).

13. The method of anyone of claims 10 to 12, wherein the set of condition indicators (234) is selected from at least one of a bearing based energy, a ball energy, an inner race energy, an outer race energy, a generator frequency of vibrations for the generator (240), hydraulic pump frequency, a hydraulic pump piston pass frequency, or side lube pump frequency.

14. The method of anyone of claims 10 to 13, wherein the set of variables (231) is selected from at least one of a voltage, a voltage phase, an acceleration, a current, a temperature, a vibration frequency, or an acoustic emission.

15. The method of anyone of claims 10 to 14 further comprising:
identifying (900) sample sensor data (260) for the set of variables (231) and sample condition indicator data 261) for the set of condition indicators (234);
generating (902) a training dataset (262, 314) using the sample sensor data (260) for the set of variables (231) and the sample condition indicator data 261) for the set of condition indicators (234); and
training (904) the neural network (205) using the training dataset (262, 314).

## Patentansprüche

1. Generatorzustandsüberwachungssystem für einen Generator (240), wobei das Generatorzustandsüberwachungssystem aufweist:
ein Computersystem (212);
ein neuronales Netz (205) in dem Computersystem (212), wobei das neuronale Netz (205) aufweist:
Schichten (220);
eine erste Schicht (219) in den Schichten (220) in dem neuronalen Netz (205), wobei die erste Schicht (219) dazu konfiguriert ist, Sensordaten (230, 340) für eine Menge von Variablen (231) für Generatorlager (241) in dem Generator (240) zu empfangen; und
eine letzte Schicht (225) vor einer Ausgabeschicht (223) in den Schichten (220) in dem neuronalen Netz (205), wobei die letzte Schicht (225) dazu konfiguriert ist, Zustandsindikatordaten (233, 341) für eine Menge von Zustandsindikatoren (234) zu empfangen, und wobei das neuronale Netz (205) trainiert ist, einen Zustandsstatus (235, 342) der Generatorlager (241) unter Verwendung der Sensordaten (230, 340) für die Menge von Variablen (231) und der Zustandsindikatordaten (233, 341) für die Menge von Zustandsindikatoren (234) vorherzusagen; und
einen Zustandsanalysator (214) in dem Computersystem (212), wobei der Zustandsanalysator (214) dazu konfiguriert ist:
die Sensordaten (230, 340) für die Menge von Variablen (231) von einem Sensorsystem (263), das den Generator (240) einschließlich der Generatorlager (241) überwacht, zu identifizieren;
die Zustandsindikatordaten (233, 341) für die Menge von Zustandsindikatoren (234) für die Generatorlager (241) zu identifizieren;
die Sensordaten (230, 340) in die erste Schicht (219) einzugeben;
die Zustandsindikatordaten (233, 341) in die letzte Schicht (225) einzugeben; und
die Vorhersage (430) des Zustandsstatus (235, 342) der Generatorlager (241) von der Ausgabeschicht (223) für das neuronale Netz (205) als Reaktion auf das Eingeben der Sensordaten (230, 340) und der Zustandsindikatordaten (233, 341) zu empfangen.

2. Generatorzustandsüberwachungssystem nach Anspruch 1, ferner aufweisend:
das Sensorsystem (263), das dazu konfiguriert ist, die Sensordaten (230, 340) für den Generator zu erzeugen.

3. Generatorzustandsüberwachungssystem nach Anspruch 1 oder 2, wobei der Zustandsanalysator (214) dazu konfiguriert ist:
eine Menge von Aktionen (250) unter Verwendung des für die Generatorlager (241) vorhergesagten Zustandsstatus (235, 342) durchzuführen.

4. Generatorzustandsüberwachungssystem nach Anspruch 3, wobei die Menge von Aktionen (250) ausgewählt ist aus einem Protokollieren des Zustandsstatus (235, 342), und/oder einem Erzeugen einer Warnung, und/oder einem Planen einer Wartung für die Generatorlager (241); und/oder einem Anhalten eines Betriebs des Generators, in dem sich die Generatorlager (241) befinden.

5. Generatorzustandsüberwachungssystem nach einem der Ansprüche 1 bis 4, wobei das neuronale Netz (205) ein Physics Informed Neural Network (205) ist.

6. Generatorzustandsüberwachungssystem nach einem der Ansprüche 1 bis 5, wobei die Menge von Zustandsindikatoren (234) ausgewählt ist aus einer lagerbasierten Energie, und/oder einer Kugelenergie, und/oder einer Innenringenergie, und/oder einer Außenringenergie, und/oder einer Generatorfrequenz von Schwingungen für den Generator (240), und/oder einer Hydraulikpumpenfrequenz, und/oder einer Kolbendurchgangsfrequenz der Hydraulikpumpe, und/oder einer Seitenschmierpumpenfrequenz.

7. Generatorzustandsüberwachungssystem nach einem der Ansprüche 1 bis 6, wobei die Menge von Variablen (231) ausgewählt ist aus einer Spannung, und/oder einer Spannungsphase, und/oder einer Beschleunigung und/oder einer Schwingungsfrequenz, und/oder einem Strom, und/oder einer Temperatur, und/oder einer akustischen Welle.

8. Generatorzustandsüberwachungssystem nach einem der Ansprüche 1 bis 7, wobei die Schichten (220) vollständig verbundene Schichten (220) sind.

9. Generatorzustandsüberwachungssystem nach einem der Ansprüche 1 bis 8, wobei der Zustandsanalysator (214) in dem Computersystem (212) dazu konfiguriert ist:
Muster-Sensordaten (260) für die Menge von Variablen (231) und Muster-Zustandsindikatordaten (261) für die Menge von Zustandsindikatoren (234) zu identifizieren;
einen Trainingsdatensatz (262, 314) unter Verwendung der Muster-Sensordaten (260) für die Menge von Variablen (231) und der Muster-Zustandsindikatordaten (261) für die Menge von Zustandsindikatoren (234) zu erzeugen; und
das neuronale Netz (205) unter Verwendung des Trainingsdatensatzes (262, 314) zu trainieren.

10. Verfahren zum Überwachen eines Zustands von Generatorlagern (241), wobei das Verfahren umfasst:
Identifizieren (1000) von Sensordaten (230, 340) für eine Menge von Variablen (231) von einem Sensorsystem (263), das einen Generator (240) einschließlich der Generatorlager (241) überwacht;
Identifizieren (1002) von Zustandsindikatordaten (233, 341) für eine Menge von Zustandsindikatoren (234) für die Generatorlager (241);
Eingeben (1004) der Sensordaten (230, 340) in eine erste Schicht (219) in Schichten (220) in einem neuronalen Netz (205);
Eingeben (1006) der Zustandsindikatordaten (233, 341) in eine letzte Schicht (225) vor einer Ausgabeschicht (223) in den Schichten (220) in dem neuronalen Netz (205), wobei das neuronale Netz (205) trainiert ist, einen Zustandsstatus (235, 342) der Generatorlager (241) unter Verwendung der Sensordaten (230, 340) für die Menge von Variablen (231) und der Zustandsindikatordaten (233, 341) für die Menge von Zustandsindikatoren (234) vorherzusagen; und
Empfangen (1008) einer Vorhersage (430) des Zustandsstatus (235, 342) für die Generatorlager (241) von der Ausgabeschicht (223) als Reaktion auf das Eingeben der Sensordaten (230, 340) und der Zustandsindikatordaten (233, 341).

11. Verfahren nach Anspruch 10, ferner umfassend:
Erzeugen (1100) der Sensordaten (230, 340) für die Generatorlager (241) unter Verwendung des Sensorsystems (263).

12. Verfahren nach Anspruch 10 oder 11, ferner umfassend:
Durchführen (1200) einer Menge von Aktionen (250) unter Verwendung des für die Generatorlager (241) vorhergesagten Zustandsstatus (235, 342).

13. Verfahren nach einem der Ansprüche 10 bis 12, wobei die Menge von Zustandsindikatoren (234) ausgewählt ist aus einer lagerbasierten Energie, und/oder einer Kugelenergie, und/oder einer Innenringenergie, und/oder einer Außenringenergie, und/oder einer Generatorfrequenz von Schwingungen für den Generator (240), und/oder einer Hydraulikpumpenfrequenz, und/oder einer Kolbendurchgangsfrequenz der Hydraulikpumpe, und/oder einer Seitenschmierpumpenfrequenz.

14. Verfahren nach einem der Ansprüche 10 bis 13, wobei die Menge von Variablen (231) ausgewählt ist aus einer Spannung, und/oder einer Spannungsphase, und/oder einer Beschleunigung, und/oder einem Strom, und/oder einer Temperatur, und/oder einer Schwingungsfrequenz, und/oder einer akustischen Emission.

15. Verfahren nach einem der Ansprüche 10 bis 14, ferner umfassend:
Identifizieren (900) von Muster-Sensordaten (260) für die Menge von Variablen (231) und Muster-Zustandsindikatordaten (261) für die Menge von Zustandsindikatoren (234);
Erzeugen (902) eines Trainingsdatensatzes (262, 314) unter Verwendung der Muster-Sensordaten (260) für die Menge von Variablen (231) und der Muster-Zustandsindikatordaten (261) für die Menge von Zustandsindikatoren (234); und
Trainieren (904) des neuronalen Netzes (205) unter Verwendung des Trainingsdatensatzes (262, 314).

## Revendications

1. Système de surveillance de la santé d'un générateur pour un générateur (240), dans lequel le système de surveillance de la santé d'un générateur comprend :
un système informatique (212) ;
un réseau neuronal (205) dans le système informatique (212),
dans lequel le réseau neuronal (205) comprend :
des couches (220) ;
une première couche (219) dans les couches (220) dans le réseau neuronal (205), la première couche (219) étant configurée pour recevoir des données de capteur (230, 340) pour un ensemble de variables (231) pour des roulements de générateur (241) dans le générateur (240) ; et
une dernière couche (225) avant une couche de sortie (223) dans les couches (220) dans le réseau neuronal (205), la dernière couche (225) étant configurée pour recevoir des données d'indicateur de condition (233, 341) pour un ensemble d'indicateurs de condition (234) et le réseau neuronal (205) étant entraîné à prédire un état de santé (235, 342) des roulements de générateur (241) à l'aide des données de capteur (230, 340) pour l'ensemble de variables (231) et des données d'indicateur de condition (233, 341) pour l'ensemble d'indicateurs de condition (234) ; et
un analyseur de santé (214) dans le système informatique (212), l'analyseur de santé (214) étant configuré pour :
identifier les données de capteur (230, 340) pour l'ensemble de variables (231)
à partir d'un système de capteur (263) surveillant le générateur (240) y compris les roulements de générateur (241) ;
identifier les données d'indicateur de condition (233, 341) pour l'ensemble d'indicateurs de condition (234) pour les roulements de générateur (241) ;
entrer les données de capteur (230, 340) dans la première couche (219) ;
entrer les données d'indicateur de condition (233, 341) dans la dernière couche (225) ; et
recevoir la prédiction (430) de l'état de santé (235, 342) des roulements de générateur (241) de la couche de sortie (223) pour le réseau neuronal (205) en réponse à l'entrée des données de capteur (230, 340) et des données d'indicateur de condition (233, 341).

2. Système de surveillance de la santé d'un générateur selon la revendication 1, comprenant en outre :
le système de capteur (263) configuré pour générer les données de capteur (230, 340) pour le générateur.

3. Système de surveillance de la santé d'un générateur selon la revendication 1 ou 2, dans lequel l'analyseur de santé (214) est configuré pour :
réaliser un ensemble d'actions (250) à l'aide de l'état de santé (235, 342) prédit pour les roulements de générateur (241).

4. Système de surveillance de la santé d'un générateur selon la revendication 3,
dans lequel l'ensemble d'actions (250) est sélectionné parmi au moins un parmi l'enregistrement de l'état de santé (235, 342), la génération d'un avertissement, la planification de la maintenance des roulements de générateur (241) ; ou
l'arrêt du fonctionnement du générateur dans lequel se trouvent les roulements de générateur (241).

5. Système de surveillance de la santé d'un générateur selon l'une quelconque des revendications 1 à 4, dans lequel le réseau neuronal (205) est un réseau neuronal (205) renseigné en données physiques.

6. Système de surveillance de la santé d'un générateur selon l'une quelconque des revendications 1 à 5, dans lequel l'ensemble d'indicateurs de condition (234) est sélectionné parmi au moins une parmi une énergie à base de roulement, une énergie de bille, une énergie de bague intérieure, une énergie de bague extérieure, une fréquence de vibrations de générateur pour le générateur (240), une fréquence de pompe hydraulique, une fréquence de passage de piston de pompe hydraulique, ou une fréquence de pompe de lubrification latérale.

7. Système de surveillance de la santé d'un générateur selon l'une quelconque des revendications 1 à 6, dans lequel l'ensemble de variables (231) est sélectionné parmi au moins un parmi une tension, une phase de tension, une accélération ou une fréquence de vibration, un courant, une température ou une onde acoustique.

8. Système de surveillance de la santé d'un générateur selon l'une quelconque des revendications 1 à 7, dans lequel les couches (220) sont des couches (220) entièrement connectées.

9. Système de surveillance de la santé d'un générateur selon l'une quelconque des revendications 1 à 8, dans lequel l'analyseur de santé (214) dans le système informatique (212) est configuré pour :
identifier des données de capteur d'échantillon (260) pour l'ensemble de variables (231) et des données d'indicateur de condition d'échantillon 261) pour l'ensemble d'indicateurs de condition (234) ;
générer un ensemble de données d'entraînement (262, 314) à l'aide des données de capteur d'échantillon (260) pour l'ensemble de variables (231) et des données d'indicateur de condition d'échantillon 261) pour l'ensemble d'indicateurs de condition (234) ; et
entraîner le réseau neuronal (205) à l'aide de l'ensemble de données d'entraînement (262, 314).

10. Procédé de surveillance d'une santé de roulements de générateur (241), le procédé comprenant :
une identification (1000) de données de capteur (230, 340) pour un ensemble de variables (231) à partir d'un système de capteur (263) de surveillance d'un générateur (240) incluant les roulements de générateur (241) ;
une identification (1002) de données d'indicateur de condition (233, 341) pour un ensemble d'indicateurs de condition (234) pour les roulements de générateur (241) ;
une entrée (1004) des données de capteur (230, 340) dans une première couche (219) dans des couches (220) dans un réseau neuronal (205) ;
une entrée (1006) des données d'indicateur de condition (233, 341) dans une dernière couche (225) avant une couche de sortie (223) dans les couches (220) dans le réseau neuronal (205), le réseau neuronal (205) étant entraîné pour prédire un état de santé (235, 342) des roulements de générateur (241) à l'aide des données de capteur (230, 340) pour l'ensemble de variables (231) et des données d'indicateur de condition (233, 341) pour l'ensemble d'indicateurs de condition (234) ; et
une réception (1008) d'une prédiction (430) de l'état de santé (235, 342) des roulements de générateur (241) de la couche de sortie (223) en réponse à l'entrée des données de capteur (230, 340) et des données d'indicateur de condition (233, 341).

11. Procédé selon la revendication 10, comprenant en outre :
une génération (1100) des données de capteur (230, 340) pour les roulements de générateur (241) à l'aide du système de capteur (263).

12. Procédé selon la revendication 10 ou 11, comprenant en outre :
une réalisation (1200) d'un ensemble d'actions (250) à l'aide de l'état de santé (235, 342) prédit pour les roulements de générateur (241).

13. Procédé selon l'une quelconque des revendications 10 à 12, dans lequel l'ensemble d'indicateurs de condition (234) est sélectionné parmi au moins une parmi une énergie à base de roulement, une énergie de bille, une énergie de bague intérieure, une énergie de bague extérieure, une fréquence de vibrations de générateur pour le générateur (240), une fréquence de pompe hydraulique, une fréquence de passage de piston de pompe hydraulique, ou une fréquence de pompe de lubrification latérale.

14. Procédé selon l'une quelconque des revendications 10 à 13, dans lequel l'ensemble de variables (231) est sélectionné parmi au moins un parmi une tension, une phase de tension, une accélération, un courant, une température, une fréquence de vibration ou une émission acoustique.

15. Procédé selon l'une quelconque des revendications 10 à 14, comprenant en outre :
une identification (900) de données de capteur d'échantillon (260) pour l'ensemble de variables (231) et de données d'indicateur de condition d'échantillon 261) pour l'ensemble d'indicateurs de condition (234) ;
une génération (902) d'un ensemble de données d'entraînement (262, 314) à l'aide des données de capteur d'échantillon (260) pour l'ensemble de variables (231) et des données d'indicateur de condition d'échantillon 261) pour l'ensemble d'indicateurs de condition (234) ; et
un entraînement (904) du réseau neuronal (205) à l'aide de l'ensemble de données d'entraînement (262, 314).
